# EUROPÄISCHE PATENTSCHRIFT

(11) **EP 2 404 362 B1**
(45) Veröffentlichungstag und Bekanntmachung des Hinweises auf die Patenterteilung: **24.07.2013**
(21) Anmeldenummer: 10705890.1
(22) Anmeldetag: 02.03.2010
(51) Int. Cl.: H02K 5/20

(54) **ELEKTROMACHINE MIT KÜHLKANÄLEN**
ELECTRIC MOTOR COMPRISING COOLING CHANNELS
MACHINE ÉLECTRIQUE DOTÉE DE CANAUX DE REFROIDISSEMENT

(30) Priorität: 06.03.2009 DE 102009001387
(43) Veröffentlichungstag der Anmeldung: 11.01.2012
(73) Patentinhaber: Robert Bosch GmbH, 70442 Stuttgart (DE)
(72) Erfinder: ROHWER, Thorsten, 71732 Tamm (DE); KERN, Denis, 70190 Stuttgart-Ost (DE); HERZBERGER, Andreas, 73553 Alfdorf (DE)
(86) Internationale Anmeldenummer: PCT/EP2010/052614
(87) Internationale Veröffentlichungsnummer: WO 2010/100143

(56) Entgegenhaltungen:
- DE-A1- 19 624 519
- DE-A1-102006 000 732
- JP-A- 7 336 946
- JP-A- 8 149 757
- JP-U- 51 018 902
- US-A- 2 862 120
- US-A1- 2005 206 252

## Beschreibung

Die vorliegende Erfindung betrifft eine Elektromaschine gemäß dem Oberbegriff des Anspruches 1 und eine Antriebseinrichtung gemäß dem Oberbegriff des Anspruches 15.

### Stand der Technik

Antriebseinrichtungen, vorzugsweise Hybridantriebseinrichtungen, insbesondere mit einer Verbrennungskraftmaschine und einer Elektromaschine werden beispielsweise eingesetzt, um Kraftfahrzeuge anzutreiben. Die als Motor und Generator fungierende Elektromaschine in dem Kraftfahrzeug weist eine Achse oder Welle mit einem daran angeordneten Stator oder Rotor auf.

In der Elektromaschine, insbesondere im Stator und/oder Rotor, entsteht Abwärme, so dass eine Kühlung der Elektromaschine erforderlich ist. Der Stator und Rotor sind innerhalb eines Gehäuses der Elektromaschine angeordnet. In das Gehäuse ist ein spiral- oder helixförmiger Kanal zum Durchleiten eines Kühlfluides zur Kühlung der Elektromaschine eingearbeitet. Die Achse, um welche der spiralförmige Kühlkanal gewickelt ist, entspricht dabei der Achse der Welle der Elektromaschine. Nach dem Einleiten des Kühlfluides in den Kanal nimmt das Kühlfluid Wärme auf und weist dadurch eine höhere Temperatur auf. Dies führt zu einer ungleichmäßigen Temperaturverteilung über die axiale Länge der Elektromaschine. In nachteiliger Weise vermindert sich damit die Wärmeaufnahme des Kühlfluides.

Die DE 199 28 247 B4 zeigt einen Motor mit einem Motorgehäuse, einen Stator von zylindrischer Form, der am Motorgehäuse befestigt ist, einen inneren Rotor, der drehbar innerhalb des Stators angeordnet ist, ein äußerer Rotor drehbar um den Stator angeordnet ist, wobei der innerer Rotor, der Stator und der äußere Rotor konzentrisch angeordnet sind und einen Mehrzahl von Bolzen zum Befestigen des Stators am Motorgehäuse aufweisen, wobei ein Kühlsystem vorgesehen ist, das eine Mehrzahl von Paaren von Kühlkanälen, die im Stator ausgeformt sind, eine Kühlmitteleinlassöffnung zum Einleiten von Kühlmittel in die Kühlkanäle, eine Kühlmittelauslassöffnung zum Ableiten von Kühlmittel von den Kühlkanälen, wobei die Kühlmitteleinlassöffnung und die Kühlmittelauslassöffnung an einem axialen Ende des inneren Rotors vorgesehen und mit den Kühlkanälen verbunden sind, einen Kühlmittelrückflussabschnitt zum Verbinden jedes Kühlkanalpaares, wobei der Kühlmittelrückflussabschnitt in einem anderen axialen Ende des inneren Rotors vorgesehen ist, aufweist, und wobei die Kühlkanäle aus dem Stator und der Mehrzahl der Bolzen gebildet sind.

Die JP 7 336946 A zeigt eine Elektromaschine mit einem mäanderförmigen Kühlkanal, wobei die Einlass- und die Auslassöffnung des Kanals im Bereich einer Mittelebene der Elektromaschine angeordnet sind.

Die JP 51 018902 U zeigt eine Elektromaschine mit einem mäanderförmigen Kühlkanal, wobei der Kanal nach der Einlassöffnung, die im Bereich einer Mittelebene der Elektromaschine angeordnet ist, sich in entgegengesetzte Umfangsrichtung verlaufende Abschnitte aufteilt.

### Offenbarung der Erfindung

### Vorteile der Erfindung

Die Aufgabe der vorliegenden Erfindung wird durch eine Elektromaschine mit den Merkmalen des Anspruchs 1 gelöst.

Aufgrund der axialen Strömung des Kühlfluides in dem wenigstens einen Kanal ergibt sich in axialer Richtung der Elektromaschine eine im Wesentlichen konstante Temperaturverteilung. Dadurch kann die Wärmeaufnahme durch das Kühlfluid verbessert werden, insbesondere dadurch bedingt, dass im Bereich einer Mittelebene der Elektromaschine die größte Menge an Wärme von dem Stator und/oder dem Rotor abgegeben wird.

Insbesondere ist die Geometrie oder die Ausrichtung des wenigstens einen Kanales dahingehend ausgebildet, dass in wenigstens einem ersten Paar von zwei Abschnitten des wenigstens einen Kanales das Kühlfluid in einem A-Abschnitt in entgegengesetzter Richtung zu einem B-Abschnitt strömt. Bei einer Strömung des Kühlfluides in entgegengesetzter und axialer Richtung mit einer Abweichung von weniger als 40 Grad in dem A-Abschnitt und in dem B-Abschnitt kann die Wärme von dem Kühlfluid besonders gut aufgenommen und gleichmäßig verteilt werden, weil aufgrund der entgegengesetzten Richtung eine Verteilung in axialer Richtung erfolgt.

In einer weiteren Ausgestaltung ist durch den A-Abschnitt und durch den B-Abschnitt des wenigstens einen Kanales je ein Teilstrom an Kühlfluid leitbar. Die Aufteilung des Kühlfluides in zwei Teilströme, die jeweils durch den A-Abschnitt und den B-Abschnitt geleitet werden, hat den Vorteil, dass nach dem Zusammenführen der beiden Teilströme eine Durchmischung dieser getrennten Ströme möglich ist.

In einer ergänzenden Ausführungsform sind die beiden Teilströme im Wesentlichen, z. B. mit einer Abweichung von weniger als 30 %, gleich.

Vorzugsweise sind die Geometrie oder die Ausrichtung des wenigstens einen Kanales dahingehend ausgebildet, dass das Kühlfluid in dem A-Abschnitt und in dem B-Abschnitt zu einer axialen Endseite der Elektromaschine oder einer Komponente der Elektromaschine strömt. Das in dem A-Abschnitt und dem B-Abschnitt strömende Kühlfluid wird somit von einer Mittelebene der Elektromaschine jeweils zu den beiden axialen Endseiten der Elektromaschine geleitet. Im Bereich der Mittelebene, d. h. in der Mitte der Elektromaschine, wird die größte Abwärme frei, so dass diese zu den axialen Endseiten geleitet wird und dort Wärme von dem Kühlfluid an die Umgebung abgegeben werden kann.

In einer Variante ist die Geometrie oder die Ausrichtung des wenigstens einen Kanales dahingehend ausgebildet, dass in wenigstens einem zweiten Paar von zwei Abschnitten des wenigstens einen Kanales das Kühlfluid in einem C-Abschnitt in entgegengesetzter Richtung zu einem D-Abschnitt strömt.

Zweckmäßig ist durch den C-Abschnitt und durch den D-Abschnitt des wenigstens einen Kanales je ein Teilstrom an Kühlfluid leitbar.

In einer weiteren Ausführungsform sind die beiden Teilströme im Wesentlichen, z. B. mit einer Abweichung von weniger als 30 %, gleich.

Insbesondere sind die Geometrie oder die Ausrichtung des wenigstens einen Kanales dahingehend ausgebildet, dass das Kühlfluid in dem C-Abschnitt und in dem D-Abschnitt zu einer auf einer Achse der Welle senkrecht stehenden Mittelebene der Elektromaschine oder einer Komponente der Elektromaschine strömt. Zweckmäßig weist die Mittelebene den gleichen Abstand zu den beiden axialen Endseiten der Elektromaschine oder eine Komponente der Elektromaschine auf.

In einer weiteren Ausgestaltung ist von dem wenigstens einen ersten Paar mit dem A-Abschnitt und dem B-Abschnitt zu dem wenigstens einen zweiten Paar mit dem C-Abschnitt und dem D-Abschnitt das Kühlfluid durch zwei Kurvenabschnitte des wenigstens einen Kanales leitbar und/oder umgekehrt. In den beiden Kurvenabschnitten wird das Kühlfluid von dem ersten Paar zu dem zweiten Paar geleitet und umgekehrt. In den beiden Kurvenabschnitten strömt das Kühlfluid wenigstens teilweise in radialer Richtung, so dass dadurch das Kühlfluid auch in radialer Richtung durch das Gehäuse und/oder den Stator geleitet werden kann.

In einer ergänzenden Variante sind das wenigstens eine erste Paar mit dem A-Abschnitt und dem B-Abschnitt von dem wenigstens einen zweiten Paar mit dem C-Abschnitt und dem D-Abschnitt mittels eines Trennsteges voneinander fluidmäßig getrennt. Der Trennsteg ermöglicht eine konstruktive einfache fluidmäßige Trennung des ersten Paares mit dem A-Abschnitt und dem B-Abschnitt von dem zweiten Paar mit dem C-Abschnitt und dem D-Abschnitt.

In einer weiteren Variante ist das Kühlfluid in radialer Richtung durch die Elektromaschine leitbar, z. B. indem das Kühlfluid durch wenigstens zwei Kurvenabschnitte des wenigstens einen Kanales und/oder durch wenigstens einen Verbindungsabschnitt des wenigstens einen Kanales leitbar ist.

In einer weiteren Ausgestaltung ist das Kühlfluid durch wenigstens einen Verbindungsabschnitt des wenigsten Kanales von dem wenigstens einem ersten Paar mit dem A-Abschnitt und dem B-Abschnitt zu dem wenigstens einen zweiten Paar mit dem C-Abschnitt und dem D-Abschnitt leitbar und/oder das Kühlfluid ist durch wenigstens einen Verbindungsabschnitt des wenigsten Kanales von dem wenigstens einem zweiten Paar mit dem C-Abschnitt und dem D-Abschnitt zu dem wenigstens einen ersten Paar mit dem A-Abschnitt und dem B-Abschnitt leitbar.

In dem wenigstens einen Verbindungsabschnitt strömt das Kühlfluid wenigstens teilweise in radialer Richtung, so dass dadurch das Kühlfluid auch in radialer Richtung durch die Elektromaschine geleitet werden kann. Ferner werden in dem wenigstens einen Verbindungsabschnitt die durch den C-Abschnitt und den D-Abschnitt geleiteten Teilströme des Kühlfluides vereint, so dass mögliche Temperaturunterschiede im Bereich zwischen dem C-Abschnitt und dem D-Abschnitt durch eine Vermischung in dem wenigstens einen Verbindungsabschnitt im Wesentlichen ausgeglichen werden können. Außerdem ist der wenigstens eine Verbindungsabschnitt vorzugsweise im Bereich einer Mittelebene der Elektromaschine angeordnet, in dessen Bereich die größte Menge an Wärme freigesetzt wird. Der Verbindungsabschnitt, insbesondere der Strömungsquerschnitt des Verbindungsabschnittes, ist dabei vorzugsweise dahingehend ausgelegt, dass das Kühlfluid durch den Verbindungsabschnitt in einer turbulenten Strömung durchgeleitet wird. Dadurch tritt einerseits eine gute Vermischung des Kühlfluides auf und andererseits kann bei einer turbulenten Strömung auch eine besonders gute Wärmeaufnahme erfolgen, was den Vorteil hat, dass in dem Bereich der Elektromaschine mit dem größten Bedarf an Kühlung, weil hier die größte Menge an Wärme entsteht, auch eine besonders gute Kühlwirkung des Kühlfluides aufgrund der turbulenten Strömung in dem wenigstens einen Verbindungsabschnitt möglich ist.

Insbesondere ist der wenigstens eine Kanal in dem Gehäuse und/oder in dem Stator ausgebildet und/oder das Kühlfluid ist eine Flüssigkeit, insbesondere ein Öl oder ein Wasser-Glykol-Gemisch, und/oder das Kühlfluid ist durch den wenigstens einen Kanal in radialer und axialer Richtung der Elektromaschine, und ist vorzugsweise mäanderförmig, insbesondere mit gegenläufiger Axialströmung, leitbar.

Eine erfindungsgemäße Antriebseinrichtung, vorzugsweise Hybridantriebseinrichtung, insbesondere für ein Kraftfahrzeug, umfasst vorzugsweise eine Verbrennungskraftmaschine, insbesondere zum Antrieb des Kraftfahrzeuges, vorzugsweise wenigstens ein Gehäuse, wenigstens eine, vorzugsweise in dem wenigstens einen Gehäuse angeordnete, Elektromaschine mit einem Stator und einem Rotor, wobei die wenigstens eine Elektromaschine gemäß einer in dieser Schutzrechtsanmeldung beschriebenen Elektromaschine ausgebildet ist.

In einer weiteren Ausgestaltung ist das wenigstens eine Gehäuse mehrteilig.

In einer zusätzlichen Ausgestaltung ist das Gehäuse einteilig.

In einer weiteren Ausgestaltung fungiert die wenigstens eine Elektromaschine als Motor und/oder als Generator.

Ein erfindungsgemäßes Kraftfahrzeug umfasst eine dieser Schutzrechtsanmeldung beschriebene Elektromaschine und/oder eine in dieser Schutzrechtsanmeldung beschriebene Antriebseinrichtung.

In einer weiteren Ausgestaltung umfasst das Kraftfahrzeug aufladbare Batterien. Die Batterien versorgen die Elektromaschine mit elektrischen Strom und beim Verzögern des Kraftfahrzeuges mittels der Elektromaschine können die Batterien von dem von der Elektromaschine erzeugen elektrischen Strom aufgeladen werden. Außerdem können die Batterien auch während eines Stillstandes des Kraftfahrzeugs, beispielsweise von einem öffentlichen Stromnetz, aufgeladen werden. Insbesondere sind die Batterien als Lithiumionenbatterien ausgebildet.

### Kurze Beschreibung der Zeichnungen

Im Nachfolgenden wird ein Ausführungsbeispiel der Erfindung unter Bezugnahme auf die beigefügten Zeichnungen näher beschrieben. Es zeigt:
- Fig. 1: eine stark schematisierte Darstellung einer Hybridantriebseinrichtung,
- Fig. 2: eine Seitenansicht einer Elektromaschine,
- Fig. 3: eine Schnitt A-A gemäß Fig. 2,
- Fig. 4: eine perspektivische Ansicht des Gehäuses der Elektromaschine gemäß Fig: 1 mit einem Kanal zum Durchleiten eines Kühlfluides,
- Fig. 5: eine Draufsicht des Gehäuses der Elektromaschine gemäß Fig. 1 mit dem Kanal zum Durchleiten des Kühlfluides und

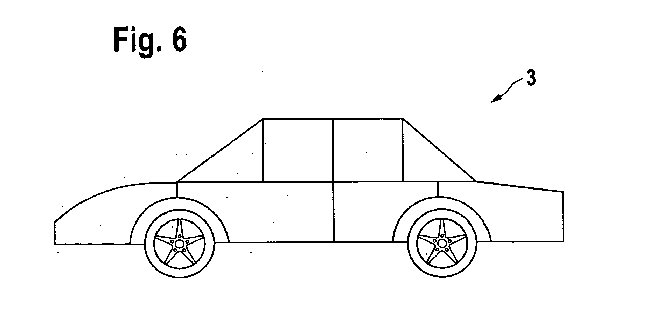

- Fig. 6: eine Ansicht eines Kraftfahrzeuges.

### Ausführungsformen der Erfindung

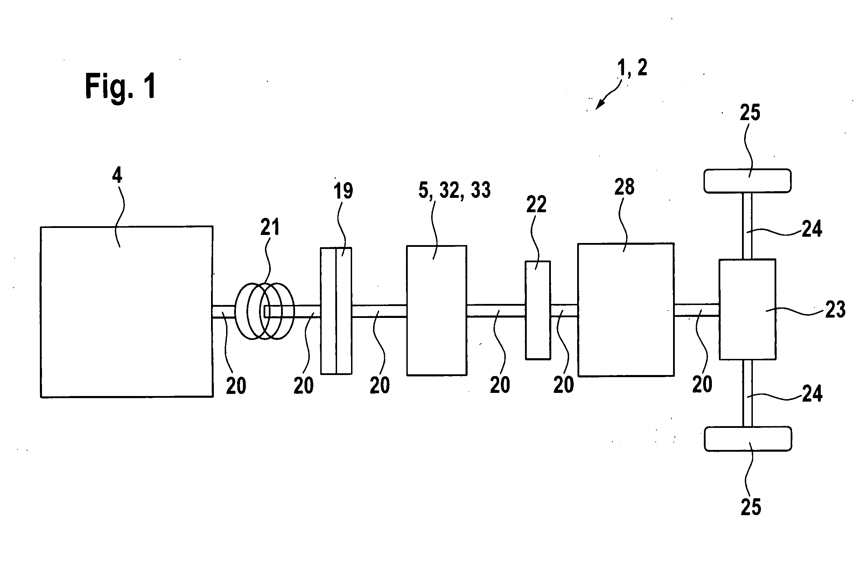

In Fig. 1 ist eine Hybridantriebseinrichtung 2 ausgebildete Antriebseinrichtung 1 für ein Kraftfahrzeug 3 dargestellt. Die Hybridantriebseinrichtung 2 für ein Kraftfahrzeug 3 umfasst eine Verbrennungskraftmaschine 4 sowie eine Elektromaschine 5, die als Motor 32 und Generator 33 fungiert, jeweils zum Antreiben oder Verzögern des Kraftfahrzeuges 3. Die Verbrennungskraftmaschine 4 und die Elektromaschine 5 sind mittels einer Antriebswelle 20 miteinander verbunden. Die mechanische Koppelung zwischen der Verbrennungskraftmaschine 4 und der Elektromaschine 5 kann mittels einer Kupplung 19 hergestellt und aufgehoben werden. Ferner ist in der Antriebswelle 20, welche die Verbrennungskraftmaschine 4 und die Elektromaschine 5 miteinander koppelt, eine Elastizität 21 angeordnet. Die Elektromaschine 5 ist mit einem Differentialgetriebe 23 mechanisch gekoppelt. In der Antriebswelle 20, welche die Elektromaschine 5 und das Differentialgetriebe 23 miteinander verbindet, ist ein Wandler 22 und ein Getriebe 28 angeordnet. Mittels des Differentialgetriebes 23 werden über die Radachsen 24 die Antriebsräder 25 angetrieben.

Anstelle der in Fig. 1 dargestellten Anordnung der Verbrennungskraftmaschine 4 und der Elektromaschine 5 für das Kraftfahrzeug 3 sind auch andere Möglichkeiten denkbar (nicht dargestellt). Beispielsweise kann die Elektromaschine 5 seitlich an der Verbrennungskraftmaschine 4 angeordnet sein und mittels eines Riemens oder einer Kette oder von Zahnrädern mit der Verbrennungskraftmaschine 4 mechanisch verbunden sein anstelle der in Fig. 1 abgebildeten Antriebswelle 20 (nicht dargestellt). Außerdem könnte die Elektromaschine 5 an einem Getriebe, z. B. ein Ausgleichsgetriebe, angeordnet sein oder die Elektromaschine 5 kann als Radnabenmotor und/oder als Radnabengenerator fungieren, d. h. im Bereich einer Radnabe angeordnet sein (nicht dargestellt).

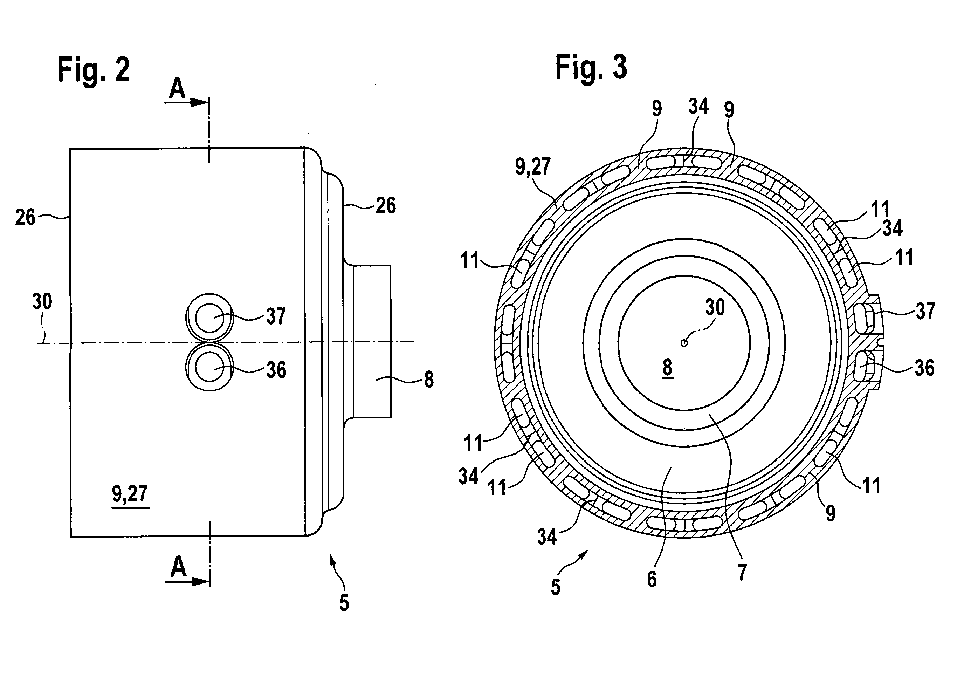

Fig. 2 und 3 zeigt die Elektromaschine 5 für die Hybridantriebseinrichtung 2 als Innenpolmaschine in einer ersten Ausführungsform mit einem feststehenden Stator 6 und einem rotierenden Rotor 7 der Hybridantriebseinrichtung 1 in einer stark vereinfachten Darstellung, so dass beispielsweise elektrische Leitungen, die Wicklungen des Stators 6 und des Rotors 7 und Fixierungsmittel für den Stator 6 nicht oder nur stark vereinfacht dargestellt sind. Eine Welle 8 besteht aus Metall, z. B. Stanl, auf dem der Rotor 7 konzentrisch angeordnet ist, wobei die Welle 8 und der Rotor 7 mittels einer nicht dargestellten Lagerung an dem feststehenden Gehäuse 9 gelagert sind. Die Welle 8, der Rotor 7 und der Stator 6 sind innerhalb des Gehäuses 9 angeordnet. Konzentrisch um den Rotor 7 ist der Stator 6 an einem Gehäuse 9 angeordnet, der mittels nicht dargestellter Fixierungsmittel daran befestigt ist. Der Stator 6 kann auch ohne zusätzliche Fixierungsmittel an dem Gehäuse 9 befestigt sein, z. B. mittels Pressverbund und/oder Schrumpfverbund. Das Gehäuse 9 wird beispielsweise mittels eines Lost Foam Gießverfahrens, eines Feingußverfahrens oder Kokillengußverfahrens hergestellt. Die Wandstärke des Gehäuses 9 liegt beispielsweise im Bereich von 2 bis 6 mm. Die Welle 8 ist dabei innerhalb der Hybridantriebseinrichtung 2 mit der Antriebswelle 20 der Hybridantriebseinrichtung 2 verbunden bzw. stellt einen Teil der Antriebswelle 20 dar.

Die Elektromaschine 5 weist einen Kanal 11 zum Durchleiten eines Kühlfluides zur Kühlung der Elektromaschine 5 auf. Der Kanal 11 ist in das Gehäuse 9 der Elektromaschine 5 integriert. An der Außenseite des Gehäuses 9 der Elektromaschine 5 ist eine Einlassöffnung 36 zum Einleiten des Kühlfluides in den Kanal 11 und eine Auslassöffnung 37 zum Ausleiten des Kühlfluides aus dem Kanal 11 ausgebildet (Fig. 2 bis 5). Die Einlassöffnung 36 und die Auslassöffnung 37 sind im Bereich einer Mittelebene 29 der Elektromaschine 5 ausgebildet. Die Mittelebene 29 steht senkrecht auf einer Achse 30 der Welle 8. Im Bereich der Mittelebene 29 wird die größte Menge an Wärme von dem Stator 6 und/oder dem Rotor 7 abgegeben. Aufgrund des Einleitens des Kühlfluides in die Einlassöffnung 36 im Bereich der Mittelebene 29 erfolgt somit eine Einspeisung des Kühlfluides in demjenigen Bereich, in welchem die größte Wärme innerhalb der Elektromaschine 5 freigesetzt wird, so dass in diesem kritischen Bereich der Elektromaschine 5 eine besonders gute Kühlung möglich ist. Der Kanal 11 stellt einen Teil des nicht vollständig abgebildeten Kühlkreislaufes 10 der Elektromaschine 5 mit Leitungen für das Kühlfluid und einem Wärmeaustauscher bzw. Radiator zum Kühlen des Kühlfluides dar.

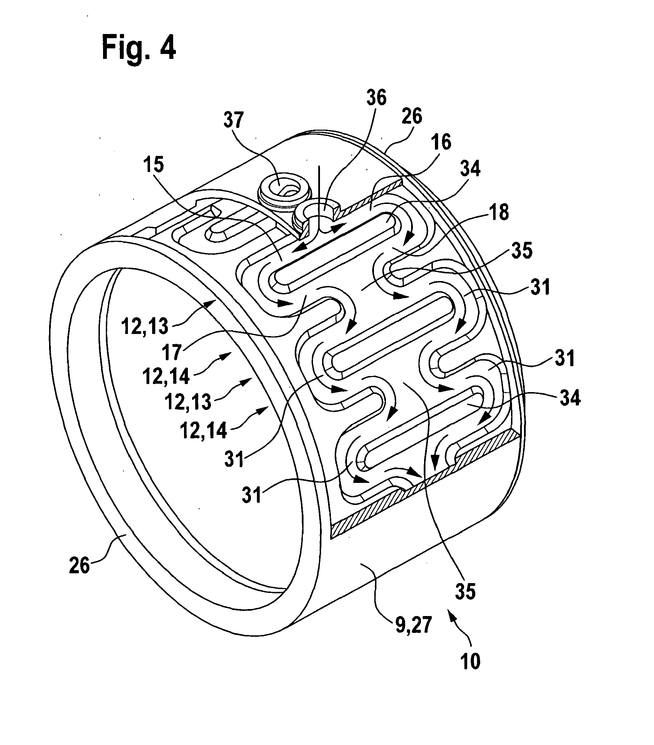

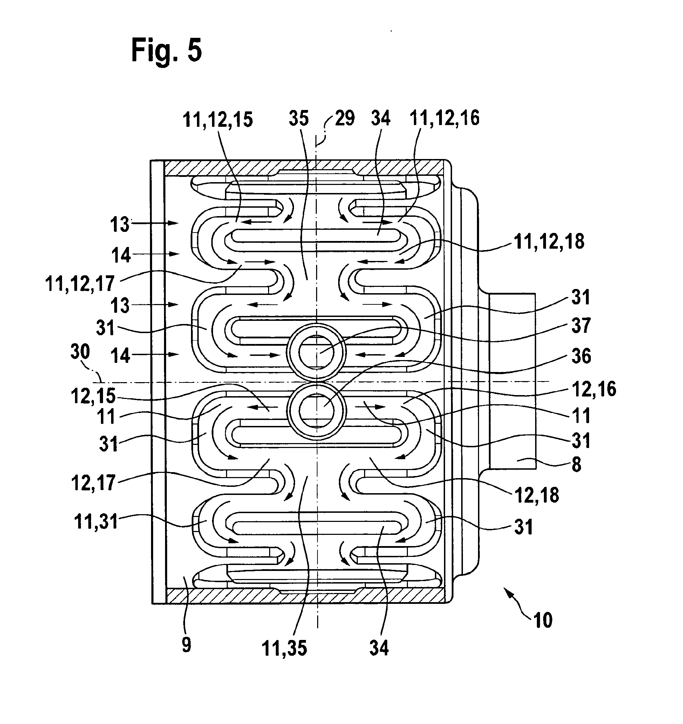

Nach dem Einleiten des Kühlfluides in die Einlassöffnung 36 teilt sich der Kanal 11 in einen A-Abschnitt 15 und in einen B-Abschnitt 16 auf (Fig. 4 und 5). Der A-Abschnitt 15 und der B-Abschnitt 16 bilden ein erstes Paar 13 von Abschnitten 15, 16 des Kanales 11. Der A-Abschnitt 15 und der B-Abschnitt 16 sind beide in axialer Richtung ausgerichtet, so dass das Kühlfluid in dem A-Abschnitt 15 und in dem B-Abschnitt 16 in axialer Richtung der Elektromaschine 5 strömt. Aufgrund der Aufteilung des Kühlfluides in den A-Abschnitt 15 und den B-Abschnitt 15 strömt das Kühlfluid in dem A-Abschnitt in entgegengesetzter Richtung als in dem B-Abschnitt 16. Das Kühlfluid strömt damit sowohl in dem A-Abschnitt 15 als auch in dem B-Abschnitt 16 zu einer axialen Endseite 26 der Elektromaschine 5. Das Gehäuse 9 als eine Komponente 27 der Elektromaschine 5 weist zwei axiale Endseiten 26 auf (Fig. 4 und 5).

Nach dem Durchströmen des A-Abschnittes 15 des Kanales 11 gelangt das Kühlfluid in einen Kurvenabschnitt 31 des Kanales 11 und strömt weiter in einen C-Abschnitt 17 des Kanales 11. Ferner strömt in analoger Weise das durch den B-Abschnitt 16 strömende Kühlfluid durch einen weiteren Kurvenabschnitt 31 in einen D-Abschnitt 17 des Kanales 11 (Fig. 4 und 5). Der C-Abschnitt 17 und der D-Abschnitt 18 bilden zusammen ein zweites Paar 14 von Abschnitten 17, 18 des Kanales 11. In dem C-Abschnitt 17 und in dem D-Abschnitt 18 strömt das Kühlfluid in axialer Richtung der Elektromaschine 5. Der A-Abschnitt 15, der B-Abschnitt 16, der C-Abschnitt 17 und der D-Abschnitt 18 stellen Abschnitten 12 des Kanales 11 dar, in denen das Kühlfluid ausschließlich in axialer Richtung strömt. Ferner strömt das Kühlfluid in dem C-Abschnitt 17 und dem D-Abschnitt 18 in entgegengesetzter Richtung, so dass das Kühlfluid von der axialen Endseite 26 zu der Mittelebene 29 der Elektromaschine 5 strömt. Das erste Paar 13 und das zweite Paar 14 sind jeweils mittels eines Trennsteges 34 fluidmäßig getrennt bzw. gegeneinander abgedichtet. Die beiden durch den C-Abschnitt 16 und den D-Abschnitt 17 strömenden Teilströme des Kühlfluides werden in einem Verbindungsabschnitt 35 des Kanales 11 miteinander vereint und durchgemischt und strömen zu einem weiteren ersten Paar 13 mit einem A-Abschnitt 15 und einem B-Abschnitt 16 des Kanales 11. Nach dem Durchströmen des Verbindungsabschnittes 35 teilt sich das Kühlfluid wieder in zwei Teilströme auf in ein weiteres erstes Paar 13 mit dem A-Abschnitt 15 und dem B-Abschnitt 16. Dieser Strömungsvorgang wiederholt sich solange, bis das Kühlfluid von der Einlassöffnung 36 um den gesamten Umfang des Gehäuses 9 zu der Auslassöffnung 37 geströmt ist. An der Auslassöffnung 37 wird das Kühlfluid wieder aus dem Gehäuse 9 herausgeleitet und mittels eines nicht dargestellten Wärmeaustauschers des Kühlkreislaufes 10 gekühlt und anschließend wieder in die Einlassöffnung 36 eingeleitet.

Das Kühlfluid strömt somit durch den Kanal 11 in dem Gehäuse 9 sowohl in axialer Richtung als auch in radialer Richtung der Elektromaschine 5 mäanderförmig. Dadurch wird aufgrund dieses gegenläufigen Strömungsbildes des Kühlfluides in dem Gehäuse 9 eine besonders gute und gleichmäßige Kühlung der Elektromaschine 5, insbesondere des Gehäuses 9, ermöglicht. Im Bereich der Mittelebene 29 der Elektromaschine 5 entsteht die größte Wärmemenge. Die Wärme wird hier von dem Kühlfluid aufgenommen und gelangt in dem ersten Paar 13 mit dem A-Abschnitt 15 und dem B-Abschnitt 16 zu den beiden axialen Endseiten 26 der Elektromaschine 5. An den beiden axialen Endseiten 26 wird wesentlich weniger Wärme von dem Stator 6 abgegeben als im Bereich der Mittelebene 29. Dadurch ist die Temperatur des Gehäuses 9 im Bereich der axialen Endseiten 26 geringer als im Bereich der Mittelebene 29. Das Kühlfluid kann damit Wärme an das Gehäuse 9 im Bereich der axialen Endseite 26 abgeben, z. B. im Bereich der Kurvenabschnitte 31 des Kanales 11. Dies ermöglicht eine gleichmäßige Temperaturverteilung in axialer Richtung des Gehäuses 9, so dass das Gehäuse 9 auch gleichmäßig Wärme an die Umgebung abgeben kann. Die Verbindungsabschnitte 35 des Kanales 11 weisen eine geringe Strömungsquerschnittsfläche auf, so dass das Kühlfluid durch die Verbindungsabschnitte 35 turbulent strömt. Dies ermöglicht in vorteilhafter Weise einerseits eine besonders gute Wärmeaufnahme durch das Kühlfluid im Bereich der Mittelebene 29 der Elektromaschine 5 und andererseits ist dadurch eine besonders gute Durchmischung der Teilströme aus dem C-Abschnitt 17 und dem D-Abschnitt 18 des Kühlfluides möglich.

Insgesamt betrachtet sind mit der erfindungsgemäßen Antriebseinrichtung 1 bzw. Elektromaschine 5 wesentliche Vorteile verbunden. Das Kühlfluid wird durch den Kanal 11 in radialer und axialer Richtung der Elektromaschine 5 mäanderförmig geleitet, so dass das Gehäuse 9 gleichmäßig gekühlt werden kann.

## Patentansprüche

1. Elektromaschine (5), insbesondere für ein Kraftfahrzeug (3), umfassend ein Gehäuse (9), wenigstens einen Kanal (11) im Gehäuse zum Durchleiten eines Kühlfluides zur Kühlung der Elektromaschine (5), wobei der Kanal eine Einlassöffnung (36) aufweist und in eine Auslassöffnung (37) mündet, wobei die Einlassöffnung (36) und die Auslassöffnung (37) im Bereich einer Mittelebene (29) angeordnet sind, die senkrecht auf einer Achse (30) einer Welle (8) der Elektromaschine steht, **dadurch gekennzeichnet, dass** der Kanal (11) zwei mäanderförmige Abschnitte (15,17,31;16,18,31) aufweist, die von der gemeinsamen Einlassöffnung (36) ausgehen und nach der Einlassöffnung (36) sich in entgegengesetzte axiale Richtung verlaufende Abschnitte aufteilen, wobei die Abschnitte jeweils nach Durchlaufen einer Mäanderschlinge (15,31,17;16,31,18) zur Durchmischung der beiden Teilströme in einem Verbindungsabschnitt (35), der im Bereich der Mittelebene (22) angeordnet ist, zusammengeführt sind und sich anschließend wieder in entgegengesetzte axiale Richtung verlaufend trennen.

## Claims

1. Electrical machine (5), in particular for a motor vehicle (3), comprising a housing (9), at least one channel (11) in the housing for conducting a cooling fluid for cooling the electrical machine (5), wherein the channel has an inlet opening (36) and opens out into an outlet opening (37), wherein the inlet opening (36) and the outlet opening (37) are arranged in the region of a central plane (29) which is perpendicular to an axis (30) of a shaft (8) of the electrical machine, **characterized in that** the channel (11) has two meandering sections (15, 17, 31; 16, 18, 31) which start from the common inlet opening (36) and, downstream of the inlet opening (36), split into sections which run in opposite axial directions, wherein the sections, in each case after passing through a meander loop (15, 31, 17; 16, 31, 18), are combined in a connecting section (35), which is arranged in the region of the central plane (29), in order to mix the two sub-streams, and are then separated so as to run in opposite axial directions again.

## Revendications

1. Machine électrique (5), en particulier pour un véhicule automobile (3), comprenant un boîtier (9), au moins un canal (11) dans le boîtier pour conduire un fluide de refroidissement pour refroidir la machine électrique (5), le canal présentant une ouverture d'entrée (36) et débouchant dans une ouverture de sortie (37), l'ouverture d'entrée (36) et l'ouverture de sortie (37) étant disposées dans la région d'un plan médian (29) qui est perpendiculaire à un axe (30) d'un arbre (8) de la machine électrique, **caractérisée en ce que** le canal (11) présente deux sections en méandres (15, 17, 31 ; 16, 18, 31) qui partent de l'ouverture d'entrée commune (36) et qui se divisent en sections s'étendant dans une direction axiale opposée après l'ouverture d'entrée (36), les sections à chaque fois après le passage d'une boucle en méandre (15, 31, 17 ; 16, 31, 18) étant réunies pour le mélange des deux flux partiels en une portion de connexion (35) qui est disposée dans la région du plan médian (29), et se séparant à nouveau ensuite en s'étendant dans une direction axiale opposée.
